Europäisches Patentamt

European Patent Office

Office européen des brevets

(11) Veröffentlichungsnummer: **0 233 971**

**A1**

(12) # EUROPÄISCHE PATENTANMELDUNG

(21) Anmeldenummer: **86102382.8**

(22) Anmeldetag: **24.02.86**

(51) Int. Cl.⁴: **F23J 15/00 , B01D 53/18**

(43) Veröffentlichungstag der Anmeldung:
**02.09.87 Patentblatt 87/36**

(84) Benannte Vertragsstaaten:
**AT BE CH DE FR GB IT LI LU NL SE**

(71) Anmelder: **NTG Nukleartechnik GmbH & Co.
KG
Am Spielacker
D-6460 Gelnhausen-Hailer(DE)**

(72) Erfinder: **Ortmayer, Rudolf Maximilian,
Ing.grad.
Kauterain
D-6464 Linsengericht-Geislitz(DE)**
Erfinder: **Finke, Peter, Dipl.-Phys.
An Peter's Nussbaum
D-6474 Ortenberg(DE)**

(74) Vertreter: **Munderich, Paul, Dipl.-Ing.
Frankfurter Strasse 84
D-6466 Gründau-Rothenbergen(DE)**

(54) **Verfahren zur Rauchgasabreinigung aus Ölbefeuerten Hausheizungsanlagen.**

(57) Die Erfindung betrifft ein Verfahren zur Rauchgasreinigung aus ölbefeuerten Hausheizungsanlagen durch Auswaschung von dessen Schadstoffanteilen aus dem Gasstrom, wobei es ganz allgemein Ziel der Erfindung ist, die Schadstoffe sowohl während ihres Durchganges durch den Waschbehälter (1) im Wasser zu binden, wobei ein weiterer Schritt, die Trennung dieser Schadstoffe aus dem Wasser vorsieht. Die Erfindung sieht vor, daß die Rauchgase von unten nach oben und das Waschwasser im Gegenstrom zur Gasrichtung durch einen porösen, keramischen Tropfkörper (1.21) geführt werden. Die im Spülflüssigkeitssammelraum (1.3) aufgefangene, Schadstoffe beinhaltende Spülmittel wird anschließend in einem Filter 3 durch die hierin eingebrachte $CaCO_3$-Füllung neutralisiert, und das von den Schadstoffen befreite Wasser über einen nachgeordneten Wärmetauscher (4) wieder dem Spülflüssigkeitsverteiler (1.11) im Waschbehälter (1) zugeführt.

Die Wärme des neutralisierten Waschwassers und die dem Waschwasser durch den Wärmetauscher (4) entzogene Wärme ist, gemäß den Beispielen, abführbar.

**"Verfahren zur Rauchgasabreinigung aus ölbefeuerten Hausheizungsanlagen"**

Die Erfindung betrifft ein Verfahren zur Rauchgasabreinigung aus ölbefeuerten Hausheizungsanlagen durch Auswaschung von dessen Schadstoffanteilen aus dem Gasstrom, sowie Hinweise auf zweckmäßige Ausbildungsdetails der für die Durchführung des Verfahrens erforderlichen Einrichtungen.

Durch die DE-AS 20 56 825 wurde eine Einrichtung zur Reinigung von Rauchgas an ölbefeuerten Heizungsanlagen bekannt, die vorsieht, daß die Brenneransaugluft mittels dem Rauchgas -Wärmetauscher -vorgewärmt wird.
Diese Einrichtung ist nicht für die Zuordnung zu einer normalen Hausheizungsanlage geeignet, da zumindest die Brenneransaugluft nicht kontinuierlich mit Rauchgasen auf eine vorbestimmte Temperatur vorgewärmt werden kann. Dies ist schon im Hinblick auf den absatzweisen Betrieb des Ölbrenners unmöglich, sondern es muß im Gegenteil damit gerechnet werden, daß zwischen den Einschaltphasen des Brenners teilweise unkontrollierbare Wärmeverluste innerhalb der Hausheizungsanlage selbst stattfinden.
Auf keinen Fall kann die Inbetriebnahme des Brenners nach Beendigung einer Abschaltphase zu immer gleichbleibenden Bedingungen erfolgen, sondern es muß eine mehr oder weniger Zeit beanspruchende Anfahrphase berücksichtigt werden, bis sich die gewünschte Kontinuität während des Verbrennungsprozeßes einstellt.

Darüberhinaus ist durch die schweizerische Patentschrift 483274 ein Abreinigungsverfahren nebst einer Einrichtung zur Durchführung des Verfahrens bekannt.
Nach diesem Verfahren wird zur Beseitigung der festen Abgaspartikel und der $SO_2$ -und $NO_2$-Anteile das Abgas in einer Verfahrensstufe mit Flüssigkeit besprüht, wobei sich diese Flüssigkeit aus Kondenswasser aus dem System und der Einspeisung von Frischwasser zusammensetzt.

Für die Entgiftung der Abgase ist dieses Verfahren, bedingt durch hohen Wasserverbrauch und eines aufwendigen Aufbaues sowie der erforderlichen Einrichtungen nicht geeignet.

Des weiteren ist durch die DE-OS 25 02 079 bekannt, daß man das von Schwefeldioxid zu reinigende Abgas durch eine Aufschlämmung einer Erdalkali-Metallverbindung leitet, die zusätzlich ein Alkalimetallsulfat enthält.
Nach Anspruch 2 kann als Erdalkali-Metallverbindung unter anderem Calciumcarbonat verwendet werden. Die unmittelbare Einleitung der Rauchgase in eine Aufschlämmung von $CaCO_3$ ist nicht sinnvoll, da der durch die Aufschlämmung gegebene Widerstand bei der Durchführung erheblich ist und einen relativ hohen Kraftbedarf bei aufwendiger Anlagenkonzeption erfordert.

In diesem Zusammenhang wird vorgeschlagen, daß die Behandlung des Abgases mit der Absorptionsaufschlämmung in einem mehrstufigen Absorptionssystem durchgeführt wird, wobei die Oxidation im wesentlichen in einem ersten Turm durchgeführt, in dem die Gasphase und eine flüssige Phase miteinander in Berührung gebracht werden und in dem ein pH-Wert von nicht über 4,5 aufrechterhalten wird.
In dem zweiten Turm wird die Gasphase und die flüssige Phase miteinander in Berührung gebracht, wobei man diesen zweiten Turm auf einem pH-Wert von über 4,5 hält.

Des weiteren wird auf die DE-OS 22 03 566 verwiesen.

Die Anmeldung beschränkt sich auf die Auswaschung von Schwefeldioxyd mittels einer Natriumbicarbonat enthaltenden Waschlösung und der Gewinnung von Calciumsulfit aus der Waschlösung.

Die Vorrichtung zur Durchführung des Verfahrens ist nicht für Hausheizungsanlagen geeignet, da sie die Anordnung mehrerer Großbehälter erfordert.

Diese Sachlage berücksichtigend ist es Aufgabe dieser Erfindung, ein Verfahren nach der eingangs beschriebenen Art zu nennen, das den eigentlichen Waschvorgang so intensiviert, daß die Schadstoffe während ihres Durchganges durch den Waschbehälter bereits eine nahezu vollständige Aufnahme durch die Flüssigkeit erfahren, und in einem weiteren Schritt, die Trennung dieser Schadstoffe aus dem Waschwasser erfolgt.

Darüberhinaus sind Hinweise auf zweckmäßige Ausbildungsdetails der für die Durchführung des Verfahrens erforderlichen Einrichtungen zu geben.

Die erfindungsgemäße Lösung dieser Aufgabe sieht vor,
daß die Rauchgase von unten nach oben, einen porösen, große Oberflächen aufweisenden, in Strömungsrichtung der Gase mit sich verengenden Durchgängen versehen formstabilisierten Tropfkörper in Kaminrichtung bei gleichzeitig im Gegenstrom zur Gasrichtung aufgegebener, tropfenförmig verteilter Spülflüssigkeit durchströmen, und diese in einen von dem Tropfkörper getrennten Sammelraum eintritt, dessen kontrollierter Füllstand für die Absaugung über den Spülflüssigkeitskreislauf steuernd ist, und
daß die mit $SO_2$ und $NO_2$ sowie weiter bindbaren Schadstoffen beladene saure Spülflüssigkeit abgesaugt und mit Druck durch einen, die genannten Schadstoffe neutralisierenden Filter geführt, anschließend gekühlt und, bei Ergänzung des Verdunstungs-und Kondensationsverlustes, dem Tropfkörper wieder tropfenförmig verteilt zugeführt wird.

Die im Gegenstrom zum Waschwasser durch den Tropfkörper geführten Rauchgase unterbrechen durch die vielfach gegebene Möglichkeit einer Querbegasung eine zusammenhängende Führung der Spülflüssigkeit, so daß die Flüssigkeit nicht in zusammenhängenden Stromfäden, sondern in Abschnitten endlicher Länge aus dem Tropfkörper austritt, wobei diese Abschnitte auch bei partiellem Einschluß von Feststoffanteilen aus den Rauchgasen in der Regel kuglige Form annehmen oder sich zumindest einer kugligen Form nähern.

Dies bedeutet, daß nicht nur im Wasser lösbare Schadstoffe, wie $SO_2$ und $NO_2$, sondern darüberhinaus auch Feststoffe -unterstützt durch wirksam werdende Oberflächenkräfte zwischen den Stoffen -aus dem Rauchgas aufgenommen werden.

Die von unten nach oben enger werdenden Querschnitte der zunächst lediglich als quasi Kapillaren zu bezeichnenden Durchgänge erlauben die Auswaschung des Hauptteiles der Schadstoffe in noch als turbulent zu bezeichnenden Bereichen, während die Feinabreinigung des Gases in der oberen, enge Poren aufweisenden Zone, bei spezifisch hoher Belastung, durch die Kühlflüssigkeit stattfindet.

Die im weiteren vorgesehene Trennung der Schadstoffe aus der sauren Spülflüssigkeit durch einen neutralisierenden Filter, der,neben den katalysatortypischen Metalloxidinhalten, im wesentlichen einen Füllungsanteil von $CaCO_3$ aufweist, basiert auf der chemisch bedingten Füllung der $SO_2$ und $NO_2$ Schadstoffe durch den $CaCO_3$-Anteil, wobei bei gesättigtem, d.h. bei verbrauchtem Filter, der $CaCO_3$-Anteil in Gips überführt wird.
Das Wechseln des Filters erfolgt in aller Regel durch das Einsetzen neuer Patronen.

Die weiter vorgeschlagene Kühlung der so gereinigten Spülflüssigkeit durch einen Wärmeaustauscher erlaubt nicht nur die freie Nutzung der hier entzogenen Wärme, sondern sie vergrößert den auswertbaren Temperaturbereich zwischen der Aufgabe des Spülmittels und dem Eintritt in den unteren Sammelraum.

Diese Wärme ist jedoch im Hinblick auf den geringen Öldurchsatz von Hausheizungen, die beispielsweise bei einem Einfamilienhaus von ca. 200 m² Wohnfläche etwa $2^{-3}$ kg/h während der Heizperiode benötigen, im Grunde genommen nicht von wesentlicher wirtschaftlicher Bedeutung, so daß die dem Wärmetauscher entzogene Wärme auch im Hinblick auf die Abschaltperioden des Brenners sinnvoll lediglich nachrangig einzuordnenden Speichern oder dgl., wie z.B. dem Brauchwasserbereiter, zugeführt werden kann.

Die Weiterbildung des Verfahrens sieht vor, daß dem Spülflüssigkeitskreislauf unmittelbar nach seinem Durchlauf durch den neutralisierenden Filter ein Teilstrom zur Vorwärmung des Heizöles und zur Einspritzung in die Brennerflamme bei Nutzung des Wärmezuwachses durch Enthalpie entnommen wird, wobei für die Teilstromentnahme der Betrieb des Brenners steuernd ist, und daß weiter durch partiellen Wärmeaustausch die in der Spülflüssigkeit enthaltene Wärme durch deren Überführung über trennende Wandungen an das Kühlwasser die Wärme durch Einführung über Leitung in den Warmwasserboiler des Kessels aufgenommen wird.

Die Abzweigung eines Teilstromes von der Spülflüssigkeit unmittelbar nach dem neuralisierenden Filter, d.h. bei Einschluß der Neutralisationswärme, ermöglicht die Vorwärmung des Heizöles unmittelbar vor dem Brenner und die Einspritzung erhitzter Kühlflüssigkeit im Bereich der Brennerflamme und erhöht damit die Brennstoffwärme bei gleichzeitiger Herabsetzung der Eintrittstemperatur in den Tropfkörper.
Die nach der Abzweigung des Teilstromes vorgesehene Kühlung der Spülflüssigkeit durch einen Wärmetauscher verringert die Temperatur der oberhalb des Tropfkörpers wieder zuzuführenden Kühlflüssigkeit,
so daß eine relativ große Temperaturspanne zwischen der Aufgabestelle und dem Sammelraum zur Verfügung steht.

Die absatzweise Einschaltung des Brenners ist dabei steuernd für die Teilstromentnahme. Die durch das Kühlwasser des Wärmetauschers der Spülflüssigkeit entzogene Wärme wird durch Weiterleitung dem dem Kessel zugeordnete Warmwasserboiler zugeführt.

Im weiteren werden vorteilhafte Details für die Einrichtung zur Ausübung des Verfahrens genannt.

Es wird vorgeschlagen, daß der Tropfkörper in einem Waschbehälter,getragen von einem säurefesten Netz oder Lochblech, angeordnet ist, und daß der Sammelraum für die mit Schadstoffen beladene Spülflüssigkeit unterhalb des Tropfkörpers mit dem Waschbehälter, eine Einheit bildend, angeordnet ist.

Zur Ausbildung des Filters wird vermerkt, daß dieser einen Füllungsanteil von $CaCO_3$ in Verbindung mit katalysatortypischen Metalloxidinhalten aufweist.
Die Kalksteinfüllung reagiert mit den Schadstoffen $SO_2$ und $NO_2$ zu einem Calciumsulfat $CaSO_4$, d.h. zu Gips.

Aufgrund der Aggressivität des sauren Spülmittels wird vorgeschlagen, daß der Waschbehälter, die Pumpe und das Gehäuse des neutralisierenden Filters einschließlich der benötigten Rohrleitungen aus korrosionsbeständigem Stahl (z.B. VA) bestehen, und die mit Spülflüssigkeit beaufschlagten Oberflächen durch einen Emailleüberzug teilweise zusätzlich geschützt sind, wobei der Waschbehälter, die Pumpe und das Gehäuse des neutralisierenden Filters einschließlich der benötigten Rohre, zumindest partiell, aus Oxidkeramik hergestellt sein können.

Zur Überwindung des durch die Durchführung durch den Tropfkörper gegebenen Widerstandes für die Rauchgase ist vorgesehen, daß im Bereich des Kaminanschlusses ein saugender Ventilator zur Einstellung des Zuges anschließbar ist.

Der Tropfkörper kann sowohl aus gesinterter Oxidkeramik als auch aus einem korngestuften Schüttgut bestehen. Hierbei ist insbesondere an die Verwendung korngestufter Kohlenschlacke gedacht.

Die Kontrolle des minimalen Füllstandes im Spülmittelsammelraum erfolgt durch einen Füllstandsregler, der die Einspeisung zusätzlichen Frischwassers bis zur maximalen Marke steuert, wobei die Inbetriebnahme der Pumpe zur Herstellung des Spülflüssigkeitskreislaufes mit der Inbetriebnahme des Brenners erfolgt.

Die Pumpe wird in aller Regel separat abgeschaltet, da es sinnvoll ist, auch bei stillgesetztem Brenner, den Spülflüssigkeitskreislauf zumindest noch über eine einstellbare Nachlaufzeit weiter aufrechtzuerhalten.

Die Entnahme des Teilstromes ist lediglich während des Betriebes des Brenners durch ein von diesem gesteuertes Ventil möglich.

Abschließend ist zu bemerken, daß die vorgeschlagene Lösung in vollem Umfang der Aufgabenstellung gerecht wird.

Die erfindungsgemäße Einrichtung zur Ausübung des Verfahrens wird anhand einer Systemskizze einer beispielsweisen Ausführungsform näher erläutert.

Der senkrecht angeordnete Waschbehälter 1 sieht drei untereinander ausgebildete Abschnitte 1.1, 1.2 und 1.3 vor, wobei die Trennung der einzelnen Bereiche jeweils durch ein korrosions-und säurefestes Lochblech 1.13 erfolgt.

Im Abschnitt 1.1 sind ein brauseähnlicher Spülflüssigkeitsverteiler 1.11 und ein Nachfüllstutzen 1.12 für die Spülflüssigkeit angeordnet, wobei über den Verteiler 1.11 das in einem neutralisierenden Filter 3 von den Schadstoffen $SO_2$ und $NO_2$ befreite Waschwasser in ständigem Kreislauf zur erneuten Aufnahme der

$SO_2$-und $NO_2$-Anteile des im Gegenstrom durch den Tropfkörper 1.2.1 eingeleiteten Rauchgases 17 zurückgeführt und hierbei, in möglichst gleichmäßiger Verteilung, dem im Abschnitt 1.2 angeordneten Tropfkörper 1.2.1 aufgegeben wird.

Über den Nachfüllstutzen 1.12 für die Spülflüssigkeit wird in Abhängigkeit von dem Wasserverlust -im wesentlichen durch Verdampfung - zusätzlich Frischwasser nachgeführt, wobei der im Abschnitt 1.3 angeordnete Füllstandsregler 1.3.1 jeweils die erforderliche zusätzliche Frischwasserzugabe bis zur maximalen Marke steuert.

Der Heizkesselanschluß 1.2.2. für das abgehende Rauchgas 17 führt über den unteren Bereich des Abschnittes 1.2 in den Tropfkörper 1.2.1 ein. Ein Eindringen der Spülflüssigkeit 11 in den Heizkesselanschluß 1.2.2 wird durch einen im Abstand tiefer angeordneten Überlaufstutzen 1.2.3 vermieden.

Die Absaugestelle 1.3.2 für die saure Spülflüssigkeit 11 aus dem Spülmittelsammelraum 1.3 ist durch Leitungen für den Spülflüssigkeitskreislauf 5 ansaugseitig mit der Pumpe 2 verbunden, während der Druckseite der Pumpe 2 der neutralisierende Filter 3 angeschlossen ist.

Der Filter 3 neutralisiert die in der Spülflüssigkeit 11 enthaltenen Schadstoffe, so daß die neutrale Spülflüssigkeit 11 zur Wiederaufgabe über den Spülflüssigkeitsverteiler 1.11 dem Tropfkörper 1.2.1 zugeführt werden kann.

Als Zwischenstufe zwischen dem neutralisierenden Filter 3 und dem Spülflüssigkeitsverteiler 1.11 ist ein Wärmetauscher 4 vorgesehen, der das zurückführende Wasser kühlt und die durch den Wärmetauscher 4 aufgenommene Energie, wie später beschrieben, zur Nutzung freistellt.

Zur Saugförderung der Rauchgase 17 ist im Bereich des Kaminanschlusses ein saugender Ventilator 1.14 angeordnet.

Der Wärmeaustauscher 4 wird durch aus dem Wasserleitungsnetz entnommene Kühlflüssigkeit 12 beschickt und die Kühlflüssigkeit über die Austauschflächen 10 durch die heiße Spülflüssigkeit 11 erwärmt und im weiteren dem im Kessel 15 angeordneten Warmwasserboiler 16 für die Brauchwasserentnahme zugeführt. Die erwärmte Kühlflüssigkeit ist mit Pos.13 bezeichnet. Der im Spülflüssigkeitskreislauf 5 geführten Spülflüssigkeit 11 wird unmittelbar nach ihrer Neutralisation im Filter 3, bei Nutzung des durch die Enthalpie gegebenen Wärmezuwachses, ein Teilstrom 7 in einem einstellbaren Verhältnis zum Spülflüssigkeitskreislauf 5 über das einstellbare Teilstromentnahmeventil 6 abgezweigt, und dieser durch die durch Ventile 7.1 und 7.2 beherrschte Abzweige geleitet. Über das Ventil 7.1 ist die Spülmitteleinspritzung in die Brennerflamme 9 über eine Ringdüse einstellbar, während durch das Ventil 7.2 die Brennstoffvorwärmung 8.1 beschickt wird, während die Fortsetzung des Teilstromes zur Vorwärmung der Brennerdüse 8.1.1 dient.

Zur Funktion darf zusammenfassend folgendes vermerkt werden:

Der Füllstand im Spülflüssigkeitssammelraum 1.3 steuert den Spülmittelkreislauf 5, wobei dieser bei Betrieb der Hausheizungsanlage, auch bei Erreichung der voreingestellten Kesselwassertemperatur und dem damit verbundenen Stillstand des Brenners, nicht unterbrochen wird.

Unabhängig davon findet die Teilstromentnahme 7 lediglich bei Betrieb des Brenners 14 statt, d.h., das Teilstromentnahmeventil 6 ist mit Antrieb des Brenners 14 parallel geschaltet, so daß der Teilstrom 7 lediglich während der Einschaltzeit des Brenners 14 fließt.

Die Zuführung der Kühlflüssigkeit 12 zum Wärmeaustauscher 4 wird erst bei gefülltem Warmwasser boiler 16 durch übliche Mittel, z.B. Füllstandsregler, über ein Magnetventil stillgesetzt oder aber der Überlauf aus dem Warmwasserboiler 16 in den Wassernachfüllstutzen 1.12 geführt, wobei fallweise auch eine Drosselung des Kühlflüssigkeitszulaufes vorgesehen werden kann.

Bei Füllung aller Speichermöglichkeiten muß selbstverständlich die weitere Frischwasserzufuhr abgeschaltet werden.

Teileliste

1 Waschbehälter
1.1 Abschnitt
1.11 Spülflüssigkeitsverteiler
1.12 Nachfüllstutzen für Spülflüssigkeit
1.13 Lochblech
1.14 Ventilator
1.2 Abschnitt
1.2.1 Tropfkörper
1.2.2. Heizkesselanschluß für Rauchgase
1.2.3. Überlaufstutzen für Spülflüssigkeit
1.3 Spülflüssigkeitssammelraum
1.3.1 Füllstandsregler für Spülflüssigkeit
1.3.2 Absaugestelle
2 Pumpe
3 neutralisierender Filter
4 Wärmetauscher
5 Spülflüssigkeitskreislauf
6 Teilstromentnahmeventil
7 Teilstrom
7.1 Ventil zur Spülmittel-Einspritzung
7.2 Ventil zur Öl-und Brennervorwärmung
8 Brennstoff
8.1 Brennstoffvorwärmung
9 Brennerflamme
10 Austauschflächen
11 Spülflüssigkeit
12 Kühlflüssigkeit
13 Leitung zum Warmwasserboiler 16 im Kessel 15
14 Brenner
15 Heizkessel
16 Warmwasserboiler
17 Rauchgase

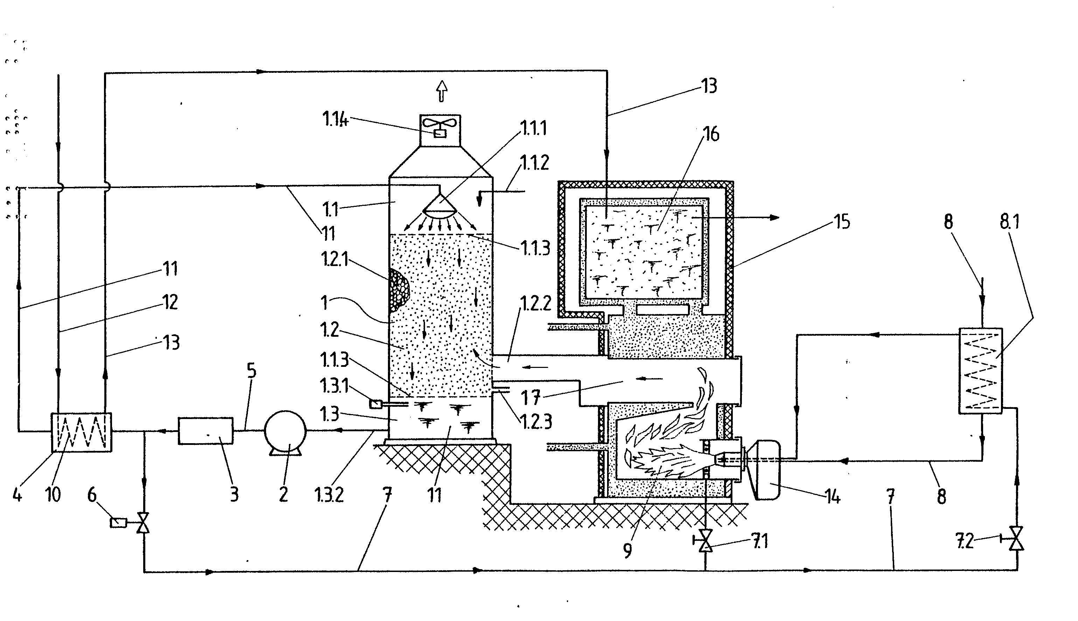

Ansprüche

1. Verfahren zur Rauchgasabreinigung aus ölbefeuerten Hausheizungsanlagen durch Auswaschung von dessen Schadstoffanteilen aus dem Gasstrom, dadurch gekennzeichnet,
daß die Rauchgase (17) von unten nach oben, einen porösen, große Oberflächen aufweisenden, in Strömungsrichtung der Gase mit sich verengenden Durchgängen versehenen formstabilisierten Tropfkörper (1.2.1) in Kaminrichtung bei gleichzeitig im Gegenstrom zur Gasrichtung aufgegebener, tropfenförmig verteilter Spülflüssigkeit (11) durchströmen, und diese in einen von dem Tropfkörper (1.2.1) getrennten Sammelraum (1.3) eintritt, dessen kontrollierter Füllstand für die Absaugung über den Spülflüssigkeitskreislauf (5) steuernd ist, und
daß die mit $SO_2$ und $NO_2$ sowie weiter bindbaren Schadstoffen beladene saure Spülflüssigkeit (11) abgesaugt und mit Druck durch einen, die genannten Schadstoffe neutralisierenden Filter (3) geführt, anschließend gekühlt und, bei Ergänzung des Verdunstungs-und Kondensationsverlustes, dem Tropfkörper (1.2.1) wieder tropfenförmig verteilt zugeführt wird.

2. Verfahren nach Anspruch 1, dadurch gekennzeichnet,
daß dem Spülflüssigkeitskreislauf (5) unmittelbar nach seinem Durchlauf durch den neutralisierenden Filter (3) ein Teilstrom (7) zur Vorwärmung des Heizöles (8, 8.1) und zur Einspritzung in die Brennerflamme (9) bei Nutzung des Wärmezuwachses durch Enthalpie entnommen wird, wobei für die Teilstromentnahme (7) der Betrieb des Brenners (14) steuernd ist, und
daß weiter durch partiellen Wärmeaustausch die in der Spülflüssigkeit (11) enthaltene Wärme durch deren Überführung über trennende Wandungen (10) an das Kühlwasser (12) die Wärme durch Einführung über Leitung 13 in den Warmwasserboiler (16) des Kessels (15) aufgenommen wird.

3. Einrichtung zur Ausübung des Verfahrens nach Anspruch 1 und 2, dadurch gekennzeichnet,
daß der Tropfkörper (12.1) in einem Waschbehälter (1), getragen von einem säurefesten Netz oder Lochblech (1.1.3), angeordnet ist, und
daß der Sammelraum (1.3) für die mit Schadstoffen beladene Spülflüssigkeit (11) unterhalb des Tropfkörpers (1.2.1) mit dem Waschbehälter (1), eine Einheit bildend, angeordnet ist.

4. Einrichtung nach Anspruch 1 bis 3, dadurch gekennzeichnet,
daß der neutralisierende Filter (3) einen Füllungsanteil von $CaCO_3$ in Verbindung mit katalysatortypischen Metalloxidinhalten aufweist.

5. Einrichtung zur Ausübung des Verfahrens nach den Ansprüchen 1 bis 4, dadurch gekennzeichnet,
daß der Waschbehälter (1), die Pumpe (2) und das Gehäuse des neutralisierenden Filters (3) einschließlich der benötigten Rohrleitungen aus korrosionsbeständigem Stahl (z.B. VA) bestehen, und die mit Spülflüssigkeit (11) beaufschlagten Oberflächen durch einen Emailleüberzug teilweise zusätzlich geschützt sind.

6. Einrichtung nach Anspruch 5, dadurch gekennzeichnet,
daß der Waschbehälter (1), die Pumpe (2) und das Gehäuse des neutralisierenden Filters (3) einschließlich der benötigten Rohre, zumindest partiell, aus Oxidkeramik hergestellt sind.

7. Einrichtung zur Ausübung des Verfahrens nach Anspruch 1 oder 2, dadurch gekennzeichnet,
daß im Bereich des Kaminanschlusses ein saugender Ventilator (1.14) anschließbar ist.

8. Einrichtung nach Anspruch 3, dadurch gekennzeichnet,
daß der Tropfkörper (1.2.1) aus gesinterter Oxidkeramik besteht.

9. Einrichtung nach Anspruch 3, dadurch gekennzeichnet,
daß der Tropfkörper (1.2.1) aus korngestuftem Schüttgut besteht.

10. Einrichtung nach Anspruch 1 und 2, dadurch gekennzeichnet,
daß zur Kontrolle des minimalen Füllstandes im Spülmittelsammelraum (1.3) ein Füllstandsregler - (1.3.1) vorgesehen ist, der die Einspeisung zusätzlichen Frischwassers (1.12) bis zur vorgesehenen maximalen Marke steuert,und
daß die Inbetriebnahme der Pumpe (2) zur Herstellung des Spülflüssigkeitskreislaufes (5) mit der Inbetriebnahme des Brenners (14) erfolgt.

11. Einrichtung nach Anspruch 1, 2 und 10, dadurch gekennzeichnet,
daß die Entnahme des Teilstromes (7) durch ein lediglich während des Betriebes des Brenners (14) geöffnetes Ventil (6) stattfindet.

0 233 971

## ·EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 509 029  (PARE)<br>* Seite 1, Zeile 14 - Seite 2, Zeile 33; Seite 3, Zeilen 1-12; Seite 4, Zeilen 1-23; Figur * | 1,3 | F 23 J  15/00<br>B 01 D  53/18 |
| | --- | | |
| A | FR-A-2 324 991  (TECHNIP)<br>* Seite 2, Zeilen 25-30; Seite 3, Zeilen 3-8,12-24; Figur * | 1 | |
| X | | 7 | |
| | --- | | |
| A | US-A-4 315 872  (SENJO)<br>* Spalte 1, Zeilen 6-12; Spalte 2, Zeilen 19-43; Spalte 3, Zeilen 15-41; Spalte 4, Zeilen 5-54; Figur 1 * | 1 | |
| | --- | | |
| A | DE-B-1 244 116  (ESCHER WYSS)<br>* Spalte 2, Zeilen 34-47; Figur 1 * | 1 | |
| | --- | | |
| A | DE-A-3 112 997  (SILLER)<br>* Seite 6, Absätze 2,3; Seite 7, Zeile 5 - Seite 9, Zeile 24; Seite 11, Zeilen 18-22; Figur * | 1,5 | |
| | --- | | |
| A | DE-A-3 145 302  (FRÖHLING)<br>* Seite 7, Zeile 19 - Seite 8, Zeile 34; Seite 9, Zeilen 9-27; Figur * | 2,11 | |
| | ---            -/- | | |

**RECHERCHIERTE SACHGEBIETE (Int. Cl.4)**

F 23 J
B 01 D

Der vorliegende Recherchenbericht wurde für alle Patentansprüche erstellt.

| Recherchenort | Abschlußdatum der Recherche | Prüfer |
|---|---|---|
| DEN HAAG | 24-10-1986 | PHOA Y.E. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 507 911 (DOLATA) <br> * Seite 2, Zeilen 1-8; Figur + "Bauteil-Verzeichnis" * | 2 | |
| | --- | | |
| A | DE-A-2 807 755 (GROCHOL) <br> * Seite 1, Anspruch 1 * | 8 | |
| | --- | | |
| A | GB-A-1 005 586 (SULZER) <br> * Seite 4, Zeilen 21-26; Figur 5 * | 9 | |
| | --- | | |
| A | EP-A-0 065 584 (STEULER) <br> * Seite 5, Zeilen 2-4; Figur 3 * | 10 | |
| | --- | | |
| A,D | DE-A-2 203 566 (PATENTVERWERTUNGS-GESELLSCHAFT) <br> * Seite 9, Zeilen 5-8; Figur * | 5 | RECHERCHIERTE SACHGEBIETE (Int. Cl.4) |
| | --- | | |
| A | DE-A-3 023 812 (HEAT-EXTRACTOR) | | |
| | --- | | |
| A | EP-A-0 097 631 (JOHANSSON) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 24-10-1986 | PHOA Y.E. |